# EUROPEAN PATENT SPECIFICATION

(11) **EP 0 492 960 B1**
(45) Date of publication and mention of the grant of the patent: **03.04.1996**
(21) Application number: 91311749.5
(22) Date of filing: 18.12.1991
(51) Int. Cl.: B29D 29/00

(54) **Method of transferring an identifying mark onto a belt/belt sleeve**
Verfahren zum Bedrucken von Riemen nach der Transferdruck-Technik
Procédé d'impression par transfert d'une bande

(30) Priority: 26.12.1990 JP 414657/90
(43) Date of publication of application: 01.07.1992
(73) Proprietor: MITSUBOSHI BELTING LTD., Nagata-ku Kobe City Hyogo, pref. (JP)
(72) Inventor: Hamura, Takeshi, Iwakura-shi, Aichi (JP); Matsuo, Yasunori, Kokihigashi, Komaki-shi, Aichi (JP)
(74) Representative: Bond, Bentley George

(56) References cited:
- EP-A- 0 355 855
- FR-A- 2 271 050
- GB-A- 1 405 457
- GB-A- 1 423 358
- US-A- 1 394 457
- US-A- 2 783 818
- US-A- 4 640 191

## Description

This invention relates to power transmission belts and, more particularly, to a method of transferring an identifying mark onto a belt sleeve from which individual V-ribbed belts, toothed belts, and V-belts can be formed.

It is common for manufacturers of power transmission belts to impress on an exposed surface thereof an identifying mark, such as a trade name, trademark, model number, etc. It is conventional to accomplish this by attaching an unvulcanized, colored, rubber film with the desired identifying mark thereon onto a substrate consisting of a transparent synthetic resin film to define a transfer mark sheet. The transfer mark sheet is adhered to a processing drum. A cover canvas sheet, impregnated with rubber, is then placed around the transfer mark sheet on the drum after which a tension rubber layer, load-carrying cords, and a compression rubber layer are sequentially built up to form an unvulcanized belt sleeve. A jacket is placed around the compression rubber layer and the belt sleeve, with the jacket thereon, is vulcanized using conventional techniques. The compression rubber layer of the vulcanized belt sleeve is processed to define individual V-shaped grooves and/or to cut from the sleeve the individual belts. Once the belt sleeve is removed from the drum, the substrate is peeled off to expose the identifying mark on the surface of the cover canvas layer that is impregnated with rubber.

The principal problem with the above-described method is that the substrate and rubber film are forced into the back surface of the belt sleeve to thereby result in depressions which produce a stepped pattern on the back surface of the belt. That is, where the rubber film is provided, there are discrete depressions so that the back surface of the belt is not flat. While this may be of little consequence in a V-belt, it becomes significant in systems in which the back surface of the belt is used for driving purposes. Exemplary of such a system is a serpentine drive system for an automobile engine. In such systems, a single belt is trained around a plurality of components, some of which are driven by the back surface of the belt. To maintain a desired tension in such a system, it is common to employ a belt tensioner which is urged against the back surface of a part of the belt that is unsupported. There is a tendency of the tensioner to vibrate as it intermittently encounters the steps/depressions on the back surface of the belt . This results in the generation of vibrational noise, which is clearly undesirable. There is also the possibility of significant noise generation as the back surface of the belt moves against the various pulleys which it drives.

The present invention is specifically directed to overcoming the above-enumerated problems in a novel and simple manner.

In US-A-4640191, there is disclosed an apparatus for the manufacture of labels for garments and the like, by printing such labels utilizing heat transfer printing.

The present invention is directed to a method of transferring an identifying mark onto a power transmission belt or a power transmission belt sleeve (hereinafter abbreviated to "power transmission belt/belt sleeve").

According to the present invention, there is provided a method of transferring an identifying mark onto a fabric, said method comprising the steps of:
providing a transfer mark film with an identifying mark thereon;
providing a fabric; and
impressing the transfer mark film onto the fabric so that the transfer mark film is impressed on the fabric;
characterised in that the fabric is a canvas sheet and in that the canvas sheet with the transfer mark film impressed thereon is combined with at least one other component to produce an unvulcanized power transmission belt/belt sleeve.

In one form, the transfer mark film is placed on a substrate to define a transfer mark sheet which is pressed against the canvas sheet with a predetermined pressure while heat is applied thereto.

With the inventive method, the transfer mark film migrates into the fiber network of the canvas sheet so as not to cause a localized depression in the canvas sheet or project upwardly from the exposed flat surface of the canvas sheet on the belt/belt sleeve. The result is that the exposed surface of the canvas sheet on the belt/belt sleeve remains relatively flat and uninterrupted at the location of the identifying mark. Preferably, the transfer mark film is provided on the innermost or outermost surface of the belt/belt sleeve which is supported on a processing drum during the vulcanization process.

By practicing the inventive method, the identifying mark is firmly bonded to the canvas sheet fiber network. At the same time a clear identifying mark is defined on the exposed flat belt surface which is substantially uninterrupted between those portions of the belt surface carrying the identifying mark and those not having any identifying mark thereon.

To achieve the best results, the canvas sheet surface which contacts the transfer mark film is preferably pre-coated with an unvulcanized rubber before the step of pressing the transfer mark film thereon.

In one form, the substrate is a transparent, synthetic resin film that is at least one of nylon, polyester, acetate and mold releasing paper. The substrate has a thickness preferably between .01 to 0.1 mm.

The transfer mark film is preferably made by adding at least one of a vulcanizing agent, a vulcanizing assisting agent and a pigment to a rubber that is at least one of NR, CR, and SBR.

During the pressing step, heat is applied at a temperature in the range of 100 to 140°C. Preferably, the temperature is in the range of 120 to 130°C.

The pressing is carried out preferably under a pressure of between 2.0 to 3.0 Kg/cm². This pressing is carried out for between 20 to 25 seconds.

With the belt components, including the transfer mark film, built up on a forming drum, the belt/belt sleeve thereon can, after vulcanization, be cut in place as to form V-shaped grooves on the belt/belt sleeve and/or to cut individual belts from the belt sleeve.

The invention also contemplates a method of manufacturing a V-ribbed belt and placing an identifying mark on the V-ribbed belt by: attaching a transfer mark film with an identifying mark thereon to a substrate to define a transfer mark sheet; placing a canvas sheet and the transfer mark sheet together with the transfer mark film abutting the canvas sheet so that the transfer mark sheet and canvas sheet define a primary laminate; heating the primary laminate while pressing the canvas sheet and transfer mark sheet, one against the other; separating the substrate from the canvas layer and the transfer mark film; combining the canvas sheet with the transfer mark film thereon with a plurality of belt layers which plurality of layers define a secondary laminate on a forming drum so that the canvas sheet with the transfer mark film defines one of the innermost and outermost layers on the secondary laminate and the secondary laminate with the canvas sheet having the transfer mark film thereon defines an unvulcanized belt sleeve; vulcanizing the unvulcanized belt sleeve; forming at least one V-shaped groove in the vulcanized belt sleeve on the forming drum; and cutting the belt sleeve to define individual V-ribbed belts.

Reference will now be made, by way of example, to the drawings in which:
Fig. 1 is a perspective view of a transfer mark sheet made up of a substrate and a transfer mark film thereon;
Fig. 2 is a perspective view of a system for pressing the transfer mark sheet against a canvas sheet with a predetermined pressure while heat is being applied to the system to effect transference of the transfer mark film to the canvas sheet in accordance with the present invention;
Fig. 3 is a side elevation view of an alternative system for pressing a transfer mark sheet against a canvas sheet according to the present invention;
Fig. 4 is a perspective view of a still further system for pressing a transfer mark sheet against a canvas sheet according to the present invention;
Fig. 5 is a perspective view demonstrating the step of placing the canvas sheet with the transfer mark film impressed thereon around a processing drum;
Fig. 6 is an enlarged, fragmentary, cross-sectional view of a belt sleeve defined on the processing drum of Fig. 5 in accordance with the present invention; and
Fig. 7 is a perspective view of a section of a V-ribbed belt with a transfer mark film thereon applied according to the method of the present invention.

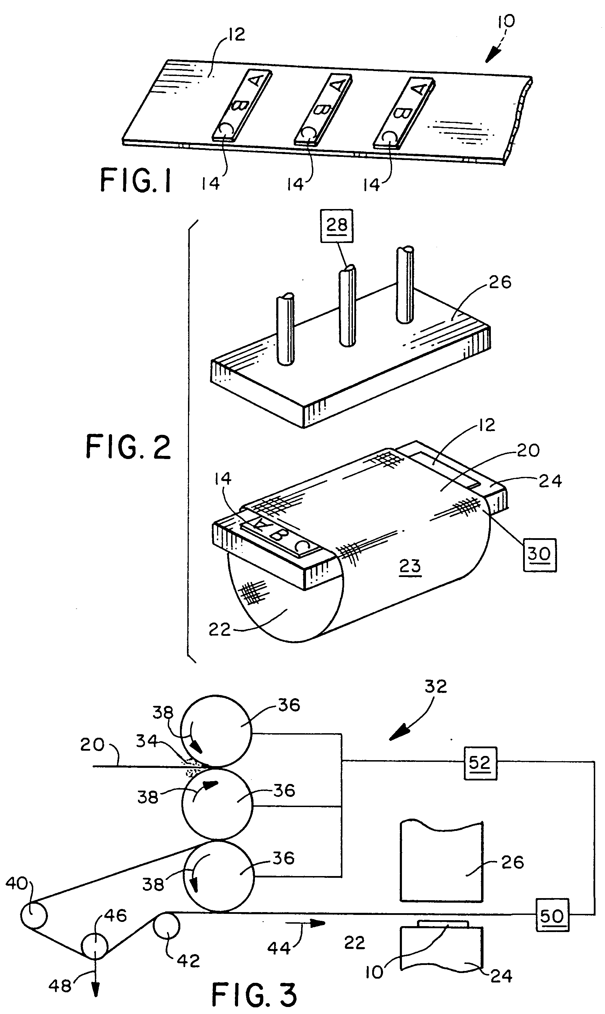

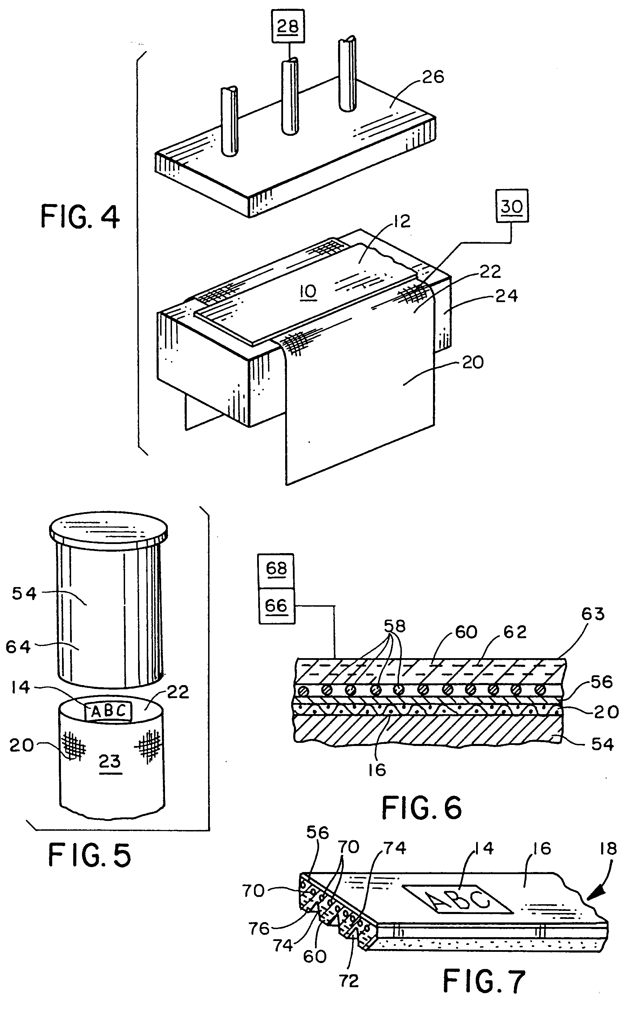

Fig. 1 shows a transfer mark sheet at 10 that is useable to practice the method of the present invention. More specifically, the transfer mark sheet 10 consists of a substrate film 12 carrying discrete transfer mark films 14. Each transfer mark film 14 has an identifying mark thereon which is to be applied to an exposed surface of a power transmission belt, such as the outside surface 16 of a multi-ribbed belt 18 shown in Fig. 7. For purposes of illustration, the letters "A", "B" and "C" have been used as the identifying mark. The identifying mark may be any trade name, trademark, model number, or other message which the manufacturer wishes to display on an exposed surface of the belt 18.

The substrate 12 consists of a transparent, synthetic resin film made of a material such as nylon, polyester, acetate or mold releasing paper. Preferably, the substrate 12 has a thickness of between 0.01 and 0.1 mm. When the thickness of the substrate 12 is less than 0.01 mm, there is a tendency of the substrate 12 to wrinkle, which distorts the identifying mark on the transfer mark film 14 carried on the substrate 12. It is preferred that the substrate 12 be formed so as not to become thermoplastic or contract during vulcanization. Any contraction would likewise result in the distortion of the transfer mark film 14 and resultingly the identifying mark thereon which is ultimately applied to the belt 18.

The transfer mark film 14 is preferably an unvulcanized, colored, rubber composition made by adding one of a vulcanizing agent, a vulcanizing assisting agent, a pigment, or the like, to a rubber such as one of NR, CR, and SBR. Alternatively, the transfer mark film 14 is a resin composition. The present invention contemplates a method of pressing the transfer mark sheet 10 against a canvas sheet 20, as shown in Figs. 2-5, to thereby impress the transfer mark film 14 thereon. The canvas sheet 20 preferably has unvulcanized rubber impregnated on the belt back surface 22, which accepts the transfer mark film 14. The canvas sheet 20 is shown in Figs. 2 and 5 to be formed into an endless sleeve 23, which can be accomplished by known techniques of sawing or thermal adhesion, which affords a stepless connection where the ends of the canvas sheet 20 are joined.

Once the canvas sheet 20 is formed into a sleeve 23, the sleeve 23 can be placed around a lower press plate 24, shown in Fig. 2, so that the canvas sheet surface 22 faces and directly abuts the transfer mark films 14. The primary, integrated laminate, consisting of the transfer mark sheet 10 and canvas sheet 20, is pressed between the lower press plate 24 and upper press plate 26. Pressure between the plates 24, 26 is developed by a pressure applying means 28, of a suitable type known to those skilled in the art.

While the pressing step is carried out, the primary laminate is heated by a heating means, shown schematically at 30 in Fig. 2. Preferably, the heat is applied at a temperature of 100 to 140° C., and preferably between 120 to 130° C. The pressure applied to the primary laminate is preferably between 2.0 and 3.0 Kg/cm². This pressure is maintained for approximately 15-25 seconds to effectively impress the transfer mark films 14 onto the canvas sheet 20.

As the above process is carried out, the rubber in the films 14 and rubber layer on the canvas sheet 20 are both in an unvulcanized state. By applying pressure to the primary laminate, the transfer mark film 14 is forced into the fiber network of the canvas sheet 20. What actually happens is that a multiplicity of recesses are formed through slight displacement of the warp and weft fibers to allow the mark films 14 to migrate therebetween without significantly depressing the canvas sheet 20 and without the transfer films 14 projecting outwardly as in each case would produce an interruption in the outside surface 16 of the completed belt 18, as shown in Fig. 7.

The canvas sheet 20 preferably consists of extensible canvas of plain weave fabric or twill fabric made of material such as cotton, nylon, polyester, or vinyl. The crossing angle between the warp and weft yarns is preferably between 90 and 150°. The canvas fibers are initially unified by applying an unvulcanized rubber either by conventional friction or coating methods.

The inventive process is not limited to the use of an endless sleeve 23 defined by the canvas sheet 20. Fig. 3 shows an alternative system at 32 for practicing the inventive method. In the system 32, rubber material 34 is continuously applied to the canvas sheet 20 by means of cooperating calender rollers 36 rotating in the direction of arrows 38 with respect to each other. This application method is known conventionally as a friction method. The canvas sheet 20 exiting from between the bottom pair of rollers 36 is directed around guide rollers 40, 42 into a horizontal path, moving in the direction of arrow 44. A constant, predetermined tension is maintained on the canvas sheet 20 by a tensioning roller 46, which is borne downwardly in the direction of arrow 48 against the unsupported portion of the canvas sheet 20 between the guide rollers 40, 42. The canvas sheet 20 is tensioned by a drawing means 50 between upper and lower presses 26, 24, respectively, which may be of the type described earlier with respect to Fig. 2. The transfer mark sheet 10 is caused to be borne against the canvas sheet surface 22 under the same heat and pressure conditions as described with respect to the method using the system in Fig. 2. The transfer of the mark film 14 to the canvas sheet 20 in the system 32 of Fig. 3 is substantially the same as that described with respect to Fig. 2, however the transfer is effected sequentially as the rollers 36 and means 50 are intermittently operated by a control 52. The advancing canvas sheet 20 exiting from between the plates 24, 26, is cut to a desired length and then formed into an endless sleeve 23 for placement on a forming drum.

Fig. 4 depicts a still further method of practicing the invention. In Fig. 4, the canvas sheet 20 is pre-cut to a predetermined length. The canvas sheet 20 is preferably rubbed with an unvulcanized rubber material, as by the friction method, before being cut into the predetermined lengths. The individual lengths, impregnated with rubber, are then placed individually over a lower press plate 24, such as that shown in Fig. 2. The transfer marking sheet 10 is placed against the canvas sheet surface 22 so that the mark films 14 thereon directly contact the canvas sheet 20. The upper press plate 26 is then urged by the pressure applying means 28 towards the lower press plate 24 with the temperature being maintained by the heating means 30 in the range previously described. After the transfer process is carried out, the individual canvas sheets 20 are then formed into an endless sleeve 23.

The method in Fig. 4 allows the lower press plate 24 to be larger than that shown in Fig. 2 in that it does not have to accommodate a preformed, surrounding canvas sheet sleeve 23 as shown in Fig. 2. Instead, the canvas sheet 20 can be simply and conveniently draped over the lower press plate 24.

The invention contemplates that the marking process can be carried out after the friction, coating, soaking, spreading, cutting and winding processes and before the canvas sheet 20 is formed into an endless sleeve 23 of the type shown in Fig. 2.

After the pressing step is performed to impress the transfer mark films 14 on the canvas sheet 20, and the sheet 20 is formed into an endless sleeve 23, the sleeve 23 is placed around a processing drum 54, as shown in Fig. 5. The individual belt components are then sequentially built up on the drum 54 over the canvas sheet 20. In an exemplary belt construction, a tension rubber layer 56 is placed around the canvas sheet 20. The tension rubber layer is made preferably from rubber consisting of at least one of NR, SBR, and CR. A load-carrying cord 58 is then spirally wrapped around the tension rubber layer 56 to define the load-carrying section of the belt. The cord 58 is made preferably of polyester fibers and aramid fibers that are spirally spun. A rubber layer 60 is then placed over a load-carrying cord 58 to define the belt compression section. The compression rubber layer 60 is made preferably from the same type of rubber as that in the tension rubber layer 56. Short reinforcing fibers 62, made of nylon, polyester, aramid cotton, or the like, are embedded in the compression rubber layer 60 and extend generally in a lateral direction.

Once all the belt components are built up on the drum 54 into a belt sleeve 63, the drum and components thereon are placed in a vulcanization sleeve (not shown), as is conventional and known to those skilled in the art. During vulcanization, the transfer mark film 14 is caused to partially enter the space between the fibers in the canvas sheet 20 by reason of an inward pressure being applied on the belt components towards the outer surface 64 of the processing drum 54. The result is that the outside belt surface 16, which is the outer surface of the canvas sheet 20, conforms to the drum surface 64 so that the entire surface is uninterrupted and substantially flat.

The above described method is a reverse processing method through which the components are sequentially built in an inside out arrangement. The invention also contemplates a sequential building up of belt components in a normal configuration. That is, the layers could be built up by initially placing the compression rubber layer 60 directly against the drum 54 and thereafter sequentially wrapping the cord 58, applying the tension rubber layer and then applying the canvas sheet 20. The transfer mark sheet 10 is then placed over the canvas sheet 20 prior to vulcanization.

Once the belt sleeve 63 is vulcanized, individual ribs can be formed and/or individual belts cut from the sleeve 63. With the belt components built up on the drum 54 in a reverse processing method, the inside surface of the belt sleeve is exposed for grinding/cutting. Where the components are built up in a normal processing method, the belt sleeve 63 must be turned inside out to effect the grinding/cutting of the inside belt surface. In either case, the compression rubber layer 60 of the belt sleeve is ground/cut to form individual V-shaped grooves by means of a grinding wheel, shown schematically at 66 in Fig. 6. The individual belts 18 are then cut from the sleeve as by a cutter, shown at 68 in Fig. 6. The grinding wheel 66 and/or cutter 68 can be used to define ribs on a multi-ribbed belt, define the side surfaces of a raw edge belt and/or to cut individual belts from the sleeve 63.

Fig. 7 shows a completed multi-ribbed belt 18 made according to the present invention. The belt 18 has a tension rubber layer 56, load-carrying cords 70 defined by the spirally wound cord 58, and a compression rubber layer 60, having grooves 72 formed lengthwise therein to define a plurality of laterally spaced, longitudinally extending ribs 74. The load-carrying cords 70 may be made from polyester and/or aramid fiber embedded in the tension rubber layer 56. Short fibers 76 are embedded in the compression rubber layer 60 and extend in a lateral direction. The fibers may be nylon, polyester, aramid, cotton, or the like.

The foregoing disclosure of specific embodiments is intended to be illustrative of the broad concepts comprehended by the invention.

## Claims

1. A method of transferring an identifying mark onto a fabric (20), said method comprising the steps of:
providing a transfer mark film (14) with an identifying mark thereon;
providing a fabric (20); and
impressing the transfer mark film (14) onto the fabric (20) so that the transfer mark film (14) is impressed on the fabric (20);
characterised in that the fabric (20) is a canvas sheet (20) and in that the canvas sheet (20) with the transfer mark film (14) impressed thereon is combined with at least one other component to produce an unvulcanized power transmission belt/belt sleeve.

2. A method according to claim 1, wherein:
the transfer mark film (14) is placed onto a substrate (12) to define a transfer mark sheet (10) comprising said transfer mark film (14) and substrate (12);
the transfer mark film (14) on the transfer mark sheet (10) is pressed against the canvas sheet (20) to thereby adhere the transfer mark film (14) to the canvas sheet (20); and
the substrate (12) is separated from the transfer mark film (14) adhered to the canvas sheet (20).

3. A method according to claim 2 including the step of vulcanizing the unvulcanized power transmission belt/belt sleeve.

4. A method according to claim 2 wherein the transfer mark film (14), substrate (12) and canvas sheet (20) define a primary laminate, and including the step of applying heat to the primary laminate during the step of pressing the transfer mark film (14) on the transfer mark sheet (10) against the canvas sheet (20).

5. A method according to claim 2 including the step of impregnating the canvas sheet (20) with an unvulcanized rubber before the step of pressing the transfer mark film (14) on the transfer mark sheet (10) against the canvas sheet (20).

6. A method according to claim 2 wherein the substrate (12) is a transparent synthetic resin film that is a least one of nylon, polyester, acetate and mold releasing paper.

7. A method according to claim 2 wherein the substrate has a thickness of 0.01 to 0.1 mm.

8. A method according to claim 2 wherein the transfer mark film (14) is a resin composition.

9. A method according to claim 2 wherein the transfer mark film (14) is made by adding at least one of a vulcanizing agent, a vulcanizing assisting agent and a pigment to a rubber that is at least one of NR, CR and SBR.

10. A method according to claim 4 wherein the step of applying heat comprises the step of heating the primary laminate at a temperature between 100 and 140°C during the step of pressing the transfer mark film (14) on the transfer mark sheet (10) against the canvas sheet (20).

11. A method according to claim 10 wherein the pressing step comprises the step of applying a pressure of 2.0 to 3.0 Kg/cm² between the canvas sheet (20) and the transfer mark sheet (10).

12. A method according to claim 4 wherein the steps of applying heat to the primary laminate and pressing the transfer mark film (14) on the transfer mark sheet (10) against the canvas sheet (20) comprise the steps of applying heat at a temperature of 100 to 140°C and a pressure of 2.0 to 3.0 Kg/cm² for 15 to 25 seconds.

13. A method according to claim 12 wherein the step of applying heat to the primary laminate comprises the step of applying heat at a temperature 120° to 130°C.

14. A method according to claim 1 including the step of vulcanizing the unvulcanized power transmission belt/belt sleeve.

15. A method according to claim 1 wherein the step of impressing the transfer mark film (14) on the canvas sheet (20) comprises the step of pressing the transfer mark film (14) and canvas sheet (20), one against the other while heating the transfer mark film (14) and canvas sheet (20).

16. A method according to claim 1 wherein the step of impressing the transfer mark film (14) on the canvas sheet (20) comprises the step of pressing the transfer mark film (14) and canvas sheet (20), one against the other with a pressure of 2.0 to 3.0 Kg/cm² while heating the transfer mark film (14) and canvas sheet (20) at a temperature of 100 to 140°C.

17. A method according to claim 16 wherein the step of pressing the transfer mark film (14) and canvas sheet (20), one against the other, is carried out for 15 to 25 seconds.

18. A method according to claim 13 wherein the step of combining the canvas sheet (20) with at least one other component comprises the steps of placing the canvas sheet (20) with the transfer mark film (14) impressed thereon on a forming drum (54) and sequentially building up on the canvas sheet (20) on the drum (54) components making up a tension section, a load-carrying section and a compression section.

19. A method according to claim 18 illuding the step of vulcanizing the unvulcanized power transmission belt/belt sleeve.

20. A method according to claim 19 including the step of grinding/cutting the vulcanized belt/belt sleeve on the forming drum (54) to define at least one V-shaped groove (72) in the belt/belt sleeve.

21. A method of manufacturing a V-ribbed belt and placing an identifying mark on the V-ribbed belt, said method comprising the steps of:
carrying out a method according to claim 1 or 2 to produce an unvulcanized power transmission belt sleeve;
combining the unvulcanized belt sleeve with a plurality of belt layers on a forming drum (54) so that the canvas sheet (20) with the transfer mark film (14) is one of the innermost and outermost layers;
vulcanizing the unvulcanized belt sleeve and the plurality of belt layers to produce a vulcanized belt sleeve;
forming at least one V-shaped groove (72) in the vulcanized belt sleeve on the forming drum (54); and
cutting the vulcanized belt sleeve to define individual V-ribbed belts.

## Patentansprüche

1. Verfahren zum Übertragen einer Erkennungsmarkierung auf ein Gewebe (20), wobei das Verfahren die Schritte umfaßt:
Bereitstellen eines Markenübertragungsfilms (14), auf dem sich eine Erkennungsmarkierung befindet;
Bereitstellen eines Gewebes (20), und
Anpressen des Markenübertragungsfilms (14) an das Gewebe (20), so daß der Markenübertragungsfilm (14) in das Gewebe (20) eingedrückt wird;
dadurch gekennzeichnet, daß das Gewebe (20) eine Segeltuchlage (20) ist, und daß die Segeltuchlage (20) mit dem darin eingedrückten Markenübertragungsfilm (14) mit mindestens einer weiteren Komponente verbunden wird, um einen nicht vulkanisierten Hochleistungstreibriemen/Riemenmantel herzustellen.

2. Verfahren nach Anspruch 1, wobei
der Markenübertragungsfilm (14) auf einem Substrat (12) angeordnet wird, um eine Markenübertragungsschicht (10) zu bestimmen, die den Markenübertragungsfilm (14) und das Substrat (12) umfaßt;
der Markenübertragungsfilm (14) auf der Markenübertragungsschicht (10) gegen die Segeltuchlage (20) gepreßt wird, um dabei den Markenübertragungsfilm (14) an der Segeltuchlage (20) anzukleben; und
das Substrat (12) vom Markenübertragungsfilm (14) getrennt wird, der an der Segeltuchlage (20) klebt.

3. Verfahren nach Anspruch 2, umfassend den Schritt des Vulkanisierens des nicht vulkanisierten Hochleistungstreibriemens/Riemenmantels.

4. Verfahren nach Anspruch 2, wobei der Markenübertragungsfilm (14), das Substrat (12) und die Segeltuchlage (20) ein primäres Laminat bestimmen, und das Verfahren den Schritt der Wärmezufuhr zum primären Laminat enthält, und zwar während des Preßschritts, in dem der Markenübertragungsfilm (14) auf der Markenübertragungsschicht (10) gegen die Segeltuchlage (20) gedrückt wird.

5. Verfahren nach Anspruch 2, umfassend den Schritt des Tränkens der Segeltuchlage (20) mit einem nicht vulkanisierten Gummi, und zwar vor dem Schritt, in dem der Markenübertragungsfilm (14) auf der Markenübertragungsschicht (10) gegen die Segeltuchlage (20) gedrücktwird.

6. Verfahren nach Anspruch 2, wobei das Substrat (12) ein durchsichtiger Kunstharzfilm ist, der aus mindestens einem Material aus der Gruppe mit Nylon, Polyester, Acetat und Formtrennpapier besteht.

7. Verfahren nach Anspruch 2, wobei das Substrat zwischen 0,01 und 0,1 mm dick ist.

8. Verfahren nach Anspruch 2, wobei der Markenübertragungsfilm (14) ein Harzverbundwerkstoff ist.

9. Verfahren nach Anspruch 2, wobei der Markenübertragungsfilm (14) hergestellt wird durch Beifügen mindestens eines Materials aus der Gruppe mit einem Vulkanisiermittel, einem Vulkanisierhilfsmittel und einem Pigment zu einem Gummi, der mindestens aus einem Material aus der Gruppe mit NR, CR und SBR besteht.

10. Verfahren nach Anspruch 4, wobei der Wärmezufuhrschritt den Schritt des Erwärmens des primären Laminats auf eine Temperatur zwischen 100 und 140 °C enthält, und zwar während des Preßschritts, in dem der Markenübertragungsfilm (14) auf der Markenübertragungsschicht (10) gegen die Segeltuchlage (20) gedrückt wird.

11. Verfahren nach Anspruch 10, wobei der Preßschritt den Schritt des Ausübens eines Druckes von 2,0 bis 3,0 Kg/cm² zwischen der Segeltuchlage (20) und der Markenübertragungsschicht (10) umfaßt.

12. Verfahren nach Anspruch 4, wobei die Schritte der Wärmezufuhr zum primären Laminat und des Pressens des Markenübertragungsfilms (14) auf der Markenübertragungsschicht (10) gegen die Segeltuchlage (20) die Schritte der Wärmezufuhr bei einer Temperatur von 100 bis 140 °C und des Ausübens eines Druckes von 2,0 bis 3,0 Kg/cm² für 15 bis 25 Sekunden umfaßt.

13. Verfahren nach Anspruch 12, wobei der Schritt der Wärmezufuhr zum primären Laminat den Schritt der Wärmezufuhr bei einer Temperatur von 120 ° bis 130 °C umfaßt.

14. Verfahren nach Anspruch 1, umfassend den Schritt des Vulkanisierens des nicht vulkanisierten Hochleistungstreibriemens/Riemenmantels.

15. Verfahren nach Anspruch 1, wobei der Schritt des Anpressens des Markenübertragungsfilms (14) an die Segeltuchlage (20) den Schritt des Pressens des Markenübertragungsfilms (14) und der Segeltuchlage (20) gegeneinander umfaßt, während der Markenübertragungsfilm (14) und die Segeltuchlage (20) erwärmt werden.

16. Verfahren nach Anspruch 1, wobei der Schritt des Anpressens des Markenübertragungsfilms (14) auf die Segeltuchlage (20) den Schritt des Pressens des Markenübertragungsfilms (14) und der Segeltuchlage (20) gegeneinander umfaßt, und zwar mit einem Druck zwischen 2,0 und 3,0 Kg/cm², während der Markenübertragungsfilm (14) und die Segeltuchlage (20) auf eine Temperatur von 100 bis 140 °C erwärmt werden.

17. Verfahren nach Anspruch 16, wobei der Schritt des Pressens des Markenübertragungsfilms (14) und der Segeltuchlage (20) gegeneinander für 15 bis 25 Sekunden ausgeführt wird.

18. Verfahren nach Anspruch 13, wobei der Verbindungsschritt der Segeltuchlage (20) mit mindestens einer weiteren Komponente die Schritte des Anbringens der Segeltuchlage (20) mit dem darauf eingepreßten Markenübertragungsfilm (14) auf einer Formtrommel (54) und des aufeinanderfolgenden Aufbauens von Komponenten auf der Segeltuchlage (20) auf der Trommel (54) umfaßt, und die Komponenten einen Zugabschnitt, einen lasttragenden Abschnitt und einen Druckabschnitt bilden.

19. Verfahren nach Anspruch 18, umfassend den Schritt des Vulkanisierens des nicht vulkanisierten Hochleistungstreibriemens/Riemenmantels.

20. Verfahren nach Anspruch 19, umfassend den Schritt des Schleifens/Schneidens des vulkanisierten Riemens/Riemenmantels auf der Formtrommel (54), um mindestens eine v-förmige Nut (72) im Riemen/Riemenmantel zu bestimmen.

21. Verfahren zum Herstellen eines Keilrippenriemens und zum Anbringen einer Erkennungsmarkierung auf dem Keilrippenriemen, wobei das Verfahren die Schritte umfaßt:
Ausführen eines Verfahrens nach Anspruch 1 oder 2, um einen nicht vulkanisierten Hochleistungstreibriemenmantel zu erzeugen;
Verbinden des nicht vulkanisierten Riemenmantels mit einer Anzahl Riemenlagen auf einer Formtrommel (54), so daß die Segeltuchlage (20) mit dem Markenübertragungsfilm (14) die innerste oder die äußerste Lage bildet;
Vulkanisieren des nicht vulkanisierten Riemenmantels und der Anzahl Riemenlagen, um einen vulkanisierten Riemenmantel zu erzeugen;
Ausbilden mindestens einer v-förmigen Nut (72) im vulkanisierten Riemenmantel auf der Formtrommel (54); und
Schneiden des vulkanisierten Riemenmantels, um einzelne Keilrippenriemen zu bestimmen.

## Revendications

1. Procédé de transfert d'une marque d'identification sur un tissu (20), ledit procédé comprenant les étapes consistant à :
prévoir un film (14) à marque de transfert, portant une marque d'identification;
prévoir un tissu (20); et
imprimer le film (14) à marque de transfert sur le tissu (20) de telle sorte que le film (14) à marque de transfert soit imprimé sur le tissu (20);
caractérisé en ce que le tissu (20) est une feuille de canevas (20) et en ce que la feuille de canevas (20), sur laquelle est imprimé le film (14) à marque de transfert, est combiné à au moins un autre composant pour produire une courroie/un manchon à courroies de transmission de puissance non vulcanisé.

2. Procédé selon la revendication 1, selon lequel :
on place le film (14) à marque de transfert sur un substrat (12) pour définir une feuille (10) à marque de transfert, comprenant ledit film (14) à marque de transfert et ledit substrat (12);
on presse le film (14) à marque de transfert situé sur la feuille (10) à marque de transfert contre la feuille de canevas (20) pour ainsi faire adhérer le film (40) à marque de transfert à la feuille de canevas (20); et
on sépare le substrat (12) du film (14) à marque de transfert, qui adhère à la feuille de canevas (20).

3. Procédé selon la revendication 2, incluant l'étape consistant à vulcaniser la courroie/le manchon à courroies de transfert de puissance non vulcanisé.

4. Procédé selon la revendication 2, selon lequel le film (14) à marque de transfert, le substrat (12) et la feuille de canevas (20) définissent un stratifié primaire, et comprenant l'étape consistant à appliquer de la chaleur au stratifié primaire pendant l'étape de pressage du film (14) à marque de transfert situé sur la feuille (10) à marque de transfert contre la feuille de canevas (20).

5. Procédé selon la revendication 2, comprenant l'étape consistant à imprégner la feuille de canevas (20) avec un caoutchouc vulcanisé avant l'étape de pressage du film (14) à marque de transfert situé sur la feuille (10) à marque de transfert contre la feuille de canevas (20).

6. Procédé selon la revendication 2, selon lequel le substrat est un film de résine synthétique transparent, qui est constitué par l'un au moins des matériaux : nylon, polyester, acétate et papier de détachement de moule.

7. Procédé selon la revendication 2, selon lequel le substrat possède une épaisseur de 0,01 à 0,1 mm.

8. Procédé selon la revendication 2, selon lequel le film (14) à marque de transfert est une composition de résine.

9. Procédé selon la revendication 2, selon lequel le film (14) à marque de transfert est formé par addition d'au moins l'un des matériaux : agent de vulcanisation, agent facilitant la vulcanisation et pigment, à un caoutchouc qui est au moins l'un de NR, CR et SBR.

10. Procédé selon la revendication 4, selon lequel l'étape d'application de chaleur comprend l'étape consistant à chauffer le stratifié primaire à une température comprise entre 100 et 140°C pendant l'étape de pressage du film (14) à marque de transfert situé sur la feuille (10) à marque de transfert contre la feuille de canevas (20).

11. Procédé selon la revendication 10, selon lequel l'étape de pressage comprend l'étape consistant à appliquer une pression de 2,0 à 3,0 kg/cm² entre la feuille de canevas (20) et la feuille (10) à marque de transfert.

12. Procédé selon la revendication 4, selon lequel les étapes consistant à appliquer de la chaleur au stratifié primaire et à presser le film (14) à marque de transfert situé sur la feuille (10) à marque de transfert contre la feuille de canevas (20) comprennent les étapes consistant à appliquer de la chaleur à une température de 100 à 140°C et une pression de 2,0 à 3,0 kg/cm² pendant 15 à 25 secondes.

13. Procédé selon la revendication 12, selon lequel l'étape consistant à appliquer une chaleur au stratifié primaire inclut l'étape consistant à appliquer une chaleur à une température de 120° à 130°C.

14. Procédé selon la revendication 1, incluant l'étape consistant à vulcaniser la courroie/le manchon à courroies de transmission de puissance non vulcanisé.

15. Procédé selon la revendication 1, selon lequel l'étape consistant à imprimer le film (14) à marque de transfert sur la feuille de canevas (20) comprend l'étape consistant à presser le film (14) à marque de transfert et la feuille de canevas (20) l'un contre l'autre tout en chauffant le film (14) à marque de transfert et la feuille de canevas (20).

16. Procédé selon la revendication 1, selon lequel l'étape consistant à imprimer le film (14) à marque de transfert sur la feuille de canevas (20) comprend l'étape consistant à presser le film (14) à marque de transfert et la feuille de canevas (20) l'un contre l'autre, à une pression de 2,0 à 3,0 kg/m², tout en chauffant le film (14) à marque de transfert et la feuille de canevas (20) à une température de 100 à 140°C.

17. Procédé selon la revendication 16, selon lequel l'étape consistant à presser le film (14) à marque de transfert et la feuille de canevas (20) l'une contre l'autre est exécutée pendant 15 à 25 secondes.

18. Procédé selon la revendication 13, selon lequel l'étape consistant à combiner la feuille de canevas (20) à au moins un autre composant comprend les étapes consistant à placer la feuille de canevas (20), sur laquelle est imprimé le film (14) à marque de transfert, sur un tambour de formage (54) et à former séquentiellement sur la feuille de canevas (20) située sur le tambour (54) des composants constituant une section travaillant en traction, une section de transfert de charge et une section travaillant en compression.

19. Procédé selon la revendication 18, incluant l'étape consistant à vulcaniser la courroie/manchon à courroies de transmission de puissance non vulcanisé.

20. Procédé selon la revendication 19, incluant l'étape consistant à meuler/découper la courroie/le manchon à courroies vulcanisé sur le tambour de formage (54) pour définir au moins une rainure en forme de V (72) dans la courroie/le manchon à courroies.

21. Procédé de fabrication d'une bande à nervure en V et de placement d'une marque d'identification sur la courroie à nervure en V, ledit procédé comprenant les étapes consistant à :
mettre en oeuvre un procédé selon la revendication 1 ou 2 pour produire un manchon à courroies de transmission de puissance non vulcanisé;
combiner le manchon à courroies non vulcanisé à une pluralité de couches de courroie sur un tambour de formage (54) de sorte que la feuille de canevas (20) équipée du film (14) à marque de transfert est située sur l'une des couches la plus intérieure et la plus extérieure;
vulcaniser le manchon à courroies non vulcanisé et la pluralité de couches de la courroie pour produire un manchon de bande vulcanisé;
former au moins une rainure en forme de V (72) dans le manchon à courroies vulcanisé sur le tambour de formage (54); et
découper le manchon à courroies vulcanisé pour définir des courroies individuelles à nervure en V.
